# EUROPÄISCHE PATENTANMELDUNG

(11) **EP 4 517 968 A1**
(43) Veröffentlichungstag der Anmeldung: **05.03.2025**
(21) Anmeldenummer: 24194012.1
(22) Anmeldetag: 12.08.2024
(51) Int. Cl.: H01M 50/227, H01M 50/229, H01M 50/231, H01M 50/242, H01M 50/249, H01M 50/367, H01M 50/383

(54) **ISOLATORVORRICHTUNG FÜR EIN BATTERIEGEHÄUSE, BATTERIEGEHÄUSE SOWIE VERWENDUNG EINER ISOLATORVORRICHTUNG IN EINEM BATTERIEGEHÄUSE**

(30) Priorität: 10.08.2023 DE 102023121466
(71) Anmelder: POLYTEC PLASTICS Germany GmbH & Co. KG, 49393 Lohne (DE)
(72) Erfinder: VAN GILST, Walter, 49393 Lohne (DE); HUCKLE, Jens, 76676 Graben-Neudorf (DE); BURKERT, Tobias, 49393 Lohne (DE); BUCK, Michael, 49401 Damme (DE); SOARES, Jorge, 49393 Lohne (DE); LESON, Christoph, 49393 Lohne (DE); BERDING, Christian, 49393 Lohne (DE)
(74) Vertreter: dompatent von Kreisler Selting Werner - Partnerschaft von Patent- und Rechtsanwälten mbB

(57) **Zusammenfassung**

Isolatorvorrichtung für ein Batteriegehäuse, wobei das Batteriegehäuse mindestens eine Gehäusewandung zur Umschließung eines Innenraums umfasst zur Aufnahme einer Batteriezellanordnung, die Isolatorvorrichtung umfassend mindestens eine zwischen der Batteriezellanordnung und der Gehäusewandung im Innenraum angeordnete erste Isolationsschicht, wobei die mindestens eine erste Isolationsschicht ausgebildet ist zur elektrischen und thermischen Isolation der Batteriezellanordnung.

## Beschreibung

Die vorliegende Erfindung betrifft eine Isolatorvorrichtung für ein Batteriegehäuse, ein Batteriegehäuse umfassend eine erfindungsgemäße Isolatorvorrichtung sowie die Verwendung einer erfindungsgemäßen Isolatorvorrichtung in einem Batteriegehäuse einer Kraftfahrzeugbatterie.

Aus dem Stand der Technik sind bereits Vorrichtungen zur thermischen und/oder elektromagnetischen Isolation einer Fahrzeugbatterieanordnung gegenüber der Umgebung bekannt geworden.

Batteriegehäuse aus dem Stand der Technik für Traktionsbatterien bzw. Antriebsbatterien von elektrisch angetriebenen Fahrzeugen weisen üblicherweise mindestens zwei miteinander verbundene Batteriegehäusebauteile auf, welche zusammen ein Batteriegehäuse bilden zur Umschließung eines Aufnahmeraums zur Anordnung von Batterien bzw. Batteriezellanordnungen. Bekannte Batteriegehäusebauteile werden üblicherweise aus metallischen Werkstoffen gefertigt, meist aus Aluminium oder Stahl. Diese Batteriegehäusebauteile bzw. Batteriegehäuse ermöglichen eine wirksame Abschirmung der Umgebung des Batteriegehäusebauteils vor elektromagnetischer Strahlung der in dem Aufnahmeraum angeordneten Traktionsbatterie und auch eine wirksame Abschirmung der Traktionsbatterie vor elektromagnetischer Strahlung, welche von Strahlungsquellen in der Umgebung der Traktionsbatterie stammt, beispielsweise von dem elektrisch angetriebenen Fahrzeug selbst. Diese Batteriegehäusebauteile und Batteriegehäuse aus metallischen Werkstoffen weisen üblicherweise den Nachteil auf, dass diese über ein hohes Gewicht verfügen.

Die DE 10 2020 111 062 A1 beschreibt die Vorsehung von Abschirmelementen im Bereich von Kunststoffgehäusen zur Aufnahme von Batterien, wobei die Abschirmelemente mit einer elektrisch leitfähigen Beschichtung versehen werden zur elektromagnetischen Abschirmung von in dem Aufnahmeraum des Batteriegehäuses aufgenommener Batteriezellen. Nachteilig an diesen Abschirmelementen ist, dass diese an einer Außenseite des Batteriegehäuses angebracht werden und sowohl den Umwelteinflüssen, als auch Einwirkungen der Umgebung durch Steinschlag etc. ausgesetzt sind.

Ausgehend von den vorbezeichneten Nachteilen des Standes der Technik liegt der vorliegenden Erfindung die Aufgabe zugrunde, eine verbesserte Isolatorvorrichtung für ein Batteriegehäuse sowie ein verbessertes Batteriegehäuse zur thermischen und/oder elektromagnetischen Isolation einer Fahrzeugbatterie bzw. einer Batteriezellanordnung bereit zu stellen.

Gemäß einem ersten Aspekt wird die Aufgabe gelöst durch eine Isolatorvorrichtung für ein Batteriegehäuse, wobei das Batteriegehäuse mindestens eine Gehäusewandung zur vollständigen oder zumindest teilweisen Umschließung eines Innenraums umfasst zur Aufnahme einer Batteriezellanordnung im Innenraum.

Die erfindungsgemäße Isolatorvorrichtung umfasst mindestens eine zwischen der Batteriezellanordnung und der Gehäusewandung des Batteriegehäuses im

Innenraum angeordnete erste Isolationsschicht, wobei die mindestens eine erste Isolationsschicht ausgebildet ist zur elektrischen und thermischen Isolation der Batteriezellanordnung. Durch die Anordnung der mindestens einen ersten Isolationsschicht im Innenraum des Batteriegehäuse wird diese vor äußeren Einwirkungen geschützt, wodurch das Risiko einer Beschädigung deutlich reduziert werden kann. Weiterhin kann durch die erfindungsgemäße Isolatorvorrichtung eine Doppelfunktion erreicht werden indem das eigentliche Batteriegehäuse zunächst gegenüber den aufgenommenen Batterien sowohl thermisch als auch elektrisch isoliert bzw. abgeschirmt wir.

Die Isolatorvorrichtung kann im Wesentlichen entlang einer Erstreckungsebene ausgebildet werden, welche zwischen der Gehäusewandung des Batteriegehäuses und einer im Batteriegehäuse aufgenommenen Batteriezellanordnung verläuft. Die Erstreckungsebene kann bevorzugt eben und flach verlaufen, kann erfindungsgemäß jedoch auch gekrümmt bzw. gewölbt verlaufen.

Bevorzugt können die Abmessungen der mindestens einen ersten Isolationsschicht orthogonal zu einer Erstreckungsebene kleiner als die Abmessungen der mindestens einen Isolationsschicht in der Erstreckungsebene ausgebildet werden. Die Ausbildung der Isolatorvorrichtung als dünne Isolationsschicht weist den Vorteil auf, dass die Isolatorvorrichtung als Schicht zwischen dem Batteriezellgehäuse und der Batteriezellanordnung eingebracht werden kann und vorhandene Zwischenräume sinnvoll genutzt werden können ohne die Gesamtabmessungen des Batteriegehäuses signifikant zu vergrößern.

Beispielsweise sind die Abmessungen der ersten Isolationsschicht orthogonal zu der Erstreckungsebene um mindestens einen Faktor 20 kleiner als die größte Abmessung gesehen in der Erstreckungsebene der ersten Isolationsschicht.

In einer beispielshaften Ausführungsform kann die erste Isolationsschicht in der Ebene der Erstreckungsebene Abmessungen von 1000 mm x 2000 mm und orthogonal zu der vorbezeichneten Erstreckungsvorrichtung eine Abmessung bzw. Dicke von 15 mm aufweisen.

Die mindestens eine erste Isolationsschicht kann im Wesentlichen flächig, insbesondere plattenförmig, ausgebildet werden und eine zur Batteriezellanordnung zugewandte erste Oberfläche und eine von der Batteriezellanordnung abgewandte zweite Oberfläche aufweisen.

Die Abmessungen der mindestens einen ersten Isolationsschicht orthogonal zu einer Erstreckungsebene der Isolationsschicht können mindestens 1 mm betragen.

Bevorzugt kann es vorgesehen sein, dass die mindestens eine erste Isolationsschicht lösbar mit der Batteriezellanordnung und/oder dem Batteriegehäuse ausgebildet wird.

Bei einer lösbaren Verbindung kann es sich beispielsweise um aneinander angepasste Rastelemente handeln, welche zwischen der mindestens einen ersten Isolationsschicht und dem gegenüberliegenden Batteriegehäuse bzw. einem zu verbindenden Teil einer Batteriezellanordnung ausgebildet werden. Beispielsweise kann eine Haken-Schlaufenverbindung vorgesehen werden zur Etablierung einer trennbaren Verbindung.

Es kann jedoch erfindungsgemäß auch vorgesehen sein, die mindestens eine Isolationsschicht über Schrauben, Nieten oder mit sonstigen handelsüblichen Befestigungsmitteln mit dem Batteriegehäuses bzw. der Batteriezellanordnung lösbar zu verbinden. Die vorgesehene Ausführungsform der lösbaren Verbindung stellt zunächst während des Einsatzes im Betrieb eine Festlegung der erfindungsgemäßen Isolatorvorrichtung gegenüber den weiteren Anteilen des Batteriegehäuses bzw. der Batteriezellanordnung sicher, ermöglicht jedoch im Falle eines späteren Recyclings beispielsweise am Ende der Lebensdauer einer Batterie ein Auseinanderbauen des Batteriegehäuses und der Batteriezellanordnung, wobei die erfindungsgemäße Isolatorvorrichtung sortenrein und rückstandslos von den übrigen Teilen getrennt werden kann.

In einer alternativen Ausführungsform kann es auch vorgesehen werden, die Isolatorvorrichtung mit dem Batteriegehäuse und/oder der Batteriezellanordnung untrennbar zu verbinden, eine derartige Verbindung kann beispielsweise durch ein Verkleben oder ein thermisches Fügen oder Verschweißen der erfindungsgemäßen Isolatorvorrichtung bevorzugt der mindestens einen ersten Isolationsschicht mit dem Batteriegehäuse und/oder Anteilen der Batteriezellanordnung erfolgen.

Die mindestens eine erste Isolationsschicht kann aus einem Duroplastmaterial, insbesondere aus einem faserverstärkten und/oder glasfaserverstärkten Material, bestehen. Die Vorsehung eines Duroplastmaterials ermöglicht zunächst die Gewährleistung einer Stabilität der mindestens einen Isolationsschicht auch unter erhöhten Temperaturen, beispielsweise bei dem thermischen Durchgehen bzw. "thermal runaway" einer Batteriezellanordnung.

Die duroplastische Ausführungsform kann somit gewährleisten, dass über einen längeren Zeitraum auch unter thermischer Belastung die Isolationsschicht bzw. die Isolatorvorrichtung an dem gewünschten Anordnungsort stabil verbleibt und sich auch unter den auftretenden thermischen Lasten nicht signifikant verformt oder durchbiegt. Die erfindungsgemäße Isolationsschicht kann somit die Austretenden Fluide und Partikel der Batteriezellanordnung gegenüber dem eigentlichen Batteriezellgehäuse zumindest in Teilbereichen abschirmen.

Erfindungsgemäß kann es vorgesehen sein, dass die mindestens eine erste Isolationsschicht ein "shield-molding compound" (SMC)-Material umfasst.

Das Material der die mindestens eine erste Isolationsschicht bildenden Materials, insbesondere das SMC-Material, kann zusätzlich ein Additiv, insbesondere ein Flammschutzmittel, bevorzugt Aluminiumtrihydrat (ATH), umfassen.

Erfindungsgemäß kann die mindestens eine erste Isolationsschicht auf ihrer ersten Oberfläche, welche der Batteriezellanordnung zugewandt ist, eine Vielzahl hervorstehender Elemente umfassen.

Die Erhebungen und/oder rippenförmigen Vorsprünge können bevorzugt zur Unterteilung eines Zwischenraums zwischen der Batteriezellanordnung und der ersten Oberfläche in mehrere Zwischenraumsektionen und/oder zur Ausbildung von Entlüftungskanälen ausgebildet werden. Durch die Entlüftungskanäle können im Falle des thermischen Durchgehens einer Batteriezelle der aufzunehmenden Batteriezellanordnung die aus der Zelle austretenden Fluide und Partikel des Ventingereignisses entlang des Entlüftungskanals auf einem definierten Weg abgeleitet werden. Insbesondere können die Fluide und Partikel zu mindestens einem Sicherheitsventil des Batteriezellgehäuses geführt werden. Durch die Vorsehung der Entlüftungskanäle und/oder Zwischenraumsektionen wird weiterhin die Ausbreitung der Fluide und Partikel bei einem thermischen Durchgehen einer Einzelzelle auf einen lokalen Bereich des Batteriegehäuses begrenzt werden, um somit ein thermisches Durchgehen weiterer Batterieeinzelzellen zu verhindern oder zumindest zu reduzieren. Die Ausgestaltung der rippenförmigen Vorsprünge weist den zusätzlichen Vorteil auf, dass die Biegesteifigkeit der ersten Isolationsschicht um deren Erstreckungsebene erhöht werden kann, ohne dabei die Dicke der Isolationsschicht im gesamten Erstreckungsbereich erhöhen zu müssen. Durch die vorbezeichnete Maßnahme kann die Biegesteifigkeit erhöht werden, ohne gleichzeitig in eine signifikante Gewichtserhöhung zu resultieren.

Die hervorstehenden Elemente können bevorzugt gegenüberliegend einer Zellträgerstruktur der aufzunehmenden Batteriezellanordnung ausgebildet werden, um auftretende Kräfte, beispielsweise aufgrund von auftretenden Verformungen im Bereich der Gehäusewandung, unmittelbar in die Zellträgerstruktur einzuleiten. Die Anordnung der hervorstehenden Elemente, bevorzugt die Rippenanordnung, kann so gewählt werden, dass Kräfte, die von unten in das Batteriegehäuse und die Gehäusewandung des Batteriegehäuses eingebracht werden, durch z.B. Aufsetzen des Fahrzeuges oder Anprall von Gegenständen unterhalb des Fahrzeuges, durch die Rippen und/oder hervorstehenden Elemente der Isolationsschicht unmittelbar in tragende Strukturen der Batteriezellanordnung eingeleitet werden können. Durch die vorteilhafte Ausführungsform wird verhindert, dass die Zellen der aufgenommenen Batteriezellanordnung und deren elektrische Kontaktierung bei Auftreten von äußeren Kräften auf das Batteriegehäuse direkt beschädigt werden.

Insbesondere können die rippenförmigen Vorsprünge zumindest abschnittsweise parallel zueinander verlaufen und/oder die Vielzahl von Entlüftungskanälen im Wesentlichen parallel zueinander verlaufen. Dabei kann es bevorzugt vorgesehen werden, dass die Breite der ausgebildeten Entlüftungskanäle und damit die Abmessungen der Entlüftungskanäle entlang der Erstreckungsrichtung der mindestens einen ersten Isolationsschicht größer als die durchschnittliche Höhe und damit die durchschnittliche Abmessung orthogonal zu der Erstreckungsebene der Entlüftungskanäle ist.

Die Isolatorvorrichtung kann zusätzlich zu der mindestens einen ersten Isolationsschicht mindestens eine zwischen der ersten Isolationsschicht und der Gehäusewandung im Innenraum angeordnete zweite Isolationsschicht umfassen.

Die mindestens eine zweite Isolationsschicht kann im Wesentlichen flächig, insbesondere plattenförmig, ausgebildet werden und eine der ersten Isolationsschicht zugewandte erste Oberfläche und eine der ersten Isolationsschicht abgewandte zweite Oberfläche umfassen.

Die mindestens eine zweite Isolationsschicht kann lösbar mit einer Gehäusewandung und/oder bevorzugt lösbar mit der ersten Isolationsschicht verbindbar ausgestaltet werden.

Entsprechende lösbare Verbindungen können wie bei der lösbaren Verbindung der mindestens einen ersten Isolationsschicht mit dem Batteriegehäuse oder der Batteriezellanordnung ausgeführt werden. Alternativ kann es erfindungsgemäß vorgesehen werden, dass die mindestens eine zweite Isolationsschicht dauerhaft mit der mindestens einen ersten Isolationsschicht und/oder zumindest Anteilen des Batteriegehäuses verbunden wird. Derartige dauerhafte Verbindungen können beispielsweise durch Verkleben, Verschweißen oder ähnliche Verbindungsverfahren etabliert werden.

Die mindestens eine erste und/oder mindestens eine zweite Isolationsschicht können zumindest eine Schicht eines Verbundmaterials, wie insbesondere eines faserverstärkten Verbundmaterials und bevorzugt eines Faserverbundwerkstoffes mit Glasfaseranteil, umfassen.

Die mindestens eine Schicht des Verbundmaterials kann Quarzglasfasern oder Silikaglasfasern umfassen. Die Quarzglasfasern können gegenüber E-Glasfasern einen erhöhten Siliciumdioxid (SiOz) Gehalt (>90%) umfassen und weisen eine erhöhte Hitzebeständigkeit im Bereich von über 1.000 °C auf.

Bei der mindestens einen Schicht gebildet durch ein Faserverbundmaterial kann es sich beispielsweise um ein unidirektionales (UD) Tape Gelege handeln. Besonders vorteilhaft kann das Matrixmaterial des Verbundwerkstoffes aus einem zu dem Batteriegehäuse kompatiblen Kunststoff gebildet werden. Dies ermöglicht, im Herstellungsprozess eine zumindest teilweise stoffliche Verbindung zwischen dem Batteriegehäuse und/oder der mindestens einen ersten Isolationsschicht und/oder der mindestens einen zweiten Isolationsschicht auszubilden.

Beispielhaft könnte die mindestens eine Isolationsschicht aus einem thermoplastischen Polypropylen Tape mit einer unidirektionalen Glasfaserverstärkung mit einem Glasfasergewichtsanteil von 70% (PP-DU-GF70) und das Batteriegehäuse aus glasfaserverstärktem Polypropylen mit einem Glasfasergewichtsanteil von 30% (PP-GF30) ausgebildet werden.

Zur Verbesserung der Anbindung bzw. Verklebung der mindestens einen zweiten Isolationsschicht mit dem Batteriegehäuse und/oder mit der mindestens einen ersten Isolationsschicht kann die mindestens eine zweite Isolationsschicht zumindest teilweise mit einer Schicht eines Haftvermittlers versehen werden.

Die mindestens eine zweite Isolationsschicht kann ausgebildet sein, elektromagnetische Strahlung aus der Umgebung gegenüber der Batteriezellanordnung bzw. umgedreht abzuschirmen.

Die mindestens eine zweite Isolationsschicht kann aus einer Folie aus einem Metall, insbesondere aus einer Aluminiumfolie, gebildet werden. Die gebildeten Folien können durchgehend oder auch zumindest teilweise perforiert ausgestaltet werden.

Weiterhin kann es vorgesehen werden, dass die mindestens eine zweite Isolationsschicht eine Folie, gebildet aus Kunststoff mit einer elektrisch leitfähigen, insbesondere metallischen Beschichtung, wie beispielsweise einer Kupfer- und/oder Nickelbeschichtung, umfasst. Durch die Aufbringung einer dünnen Schicht einer elektrisch leitfähigen Schicht kann einer elektro-magnetisch abschirmende Schicht ausgebildet werden. Hierbei wird im Vergleich zur Vorsehung der gesamten Schicht aus dem elektrisch leitfähigen Material durch die Vorsehung des Kunststoffes mit der leitfähigen Beschichtung das resultierende Gesamtgewicht reduziert werden.

Die mindestens eine zweite Isolationsschicht kann Gewebe, gebildet aus Fäden, insbesondere aus metallischen Fäden, oder ein Gewebe gebildet aus Kunststofffasern mit einer elektrischen leitfähigen Beschichtung, insbesondere einer metallischen Beschichtung, besonders bevorzugt einer Kupfer- oder Nickelbeschichtung, umfassen.

Alternativ zu der Vorsehung von Geweben können auch Fasergewebe wie insbesondere Vliesstoffe gebildet aus metallischen Fasern oder Kunststofffasern mit entsprechenden metallischen Beschichtungen zur Ausbildung der mindestens einen zweiten Isolationsschicht erfindungsgemäß vorgesehen werden.

Die mindestens eine zweite Isolationsschicht kann gebildet werden aus Stoffen, insbesondere gewebten Stoffen oder Vliesen, mit einer Beschichtung, insbesondere einer metallischen Beschichtung, bevorzugt mit einer Kupfer- oder Aluminium- oder Nickelbeschichtung.

Gemäß einem zweiten Aspekt der vorliegenden Erfindung kann ein Batteriegehäuse ausgebildet werden, welches mindestens eine Gehäusewandung zur zumindest teilweisen Umschließung eines Innenraums umfasst, wobei der Innenraum zur Aufnahme einer Batteriezellanordnung und mindestens einer Isolatorvorrichtung gemäß dem ersten Aspekt der vorliegenden Erfindung ausgebildet ist, wobei die mindestens eine erfindungsgemäße Isolatorvorrichtung zwischen der Batteriezellanordnung und der Gehäusewandung im Innenraum angeordnet ist.

Durch die Anordnung der mindestens einen ersten Isolatorvorrichtung zwischen der Batteriezellanordnung und der Gehäusewandung wird die Gehäusewandung mittels der erfindungsgemäßen Isolatorvorrichtung gegenüber der Batteriezellanordnung und insbesondere den Batteriezellen zumindest teilweise abgegrenzt bzw. bedeckt, so dass aus der Batteriezellanordnung beispielsweise austretende Gase, Fluide und/oder Partikel gegenüber der Gehäusewandung des Batteriegehäuses abgeschirmt bzw. mittels der mindestens einen ersten Isolationsschicht isoliert und besonders bevorzugt auch in spezifische Bereiche des Batteriegehäuse abgeleitet werden können.

Die mindestens eine Gehäusewandung des Batteriegehäuses kann erfindungsgemäß aus einem thermoplastischen Kunststoff ausgebildet werden.

Gemäß einem weiteren Aspekt der vorliegenden Erfindung kann die Verwendung einer erfindungsgemäßen Isolatorvorrichtung in einem Batteriegehäuse einer Kraftfahrzeugbatterie, insbesondere einer Kraftfahrzeugbatterie von elektrisch angetriebenen Kraftfahrzeugen, wie insbesondere Automobilen, Luftfahrzeugen und/oder Schiffen, erfolgen.

Nachfolgend werden unter Bezugnahme auf die beigefügten schematischen Figuren beispielhafte Ausführungsformen der erfindungsgemäßen Isolatorvorrichtung und des Batteriegehäuses dargestellt.

Es zeigen:
- Fig. 1: eine schematische Schnittansicht einer ersten beispielhaften Ausführungsformeiner erfindungsgemäßen Isolatorvorrichtung in einem Batteriegehäuse;
- Fig. 2A: eine schematische Schnittansicht einer zweiten beispielhaften Ausführungsform einer erfindungsgemäßen Isolatorvorrichtung in einem Batteriegehäuse,
- Fig. 2B: eine schematische Schnittansicht einer dritten beispielhaften Ausführungsform einer erfindungsgemäßen Isolatorvorrichtung in einem Batteriegehäuse;
- Fig. 2C: eine schematische Schnittansicht einer vierten beispielhaften Ausführungsform einer erfindungsgemäßen Isolatorvorrichtung in einem Batteriegehäuse;
- Fig. 3A: eine schematische Schnittansicht einer fünften beispielhaften Ausführungsform einer erfindungsgemäßen Isolatorvorrichtung in einem Batteriegehäuse bei Auftreten eines Venting-Ereignisses; sowie
- Fig. 3B: die vierte beispielhafte Ausführungsform der erfindungsgemäßen Isolatorvorrichtung in einem Batteriegehäuse in Schnittansicht bei Auftreten eines Crash-Ereignisses.

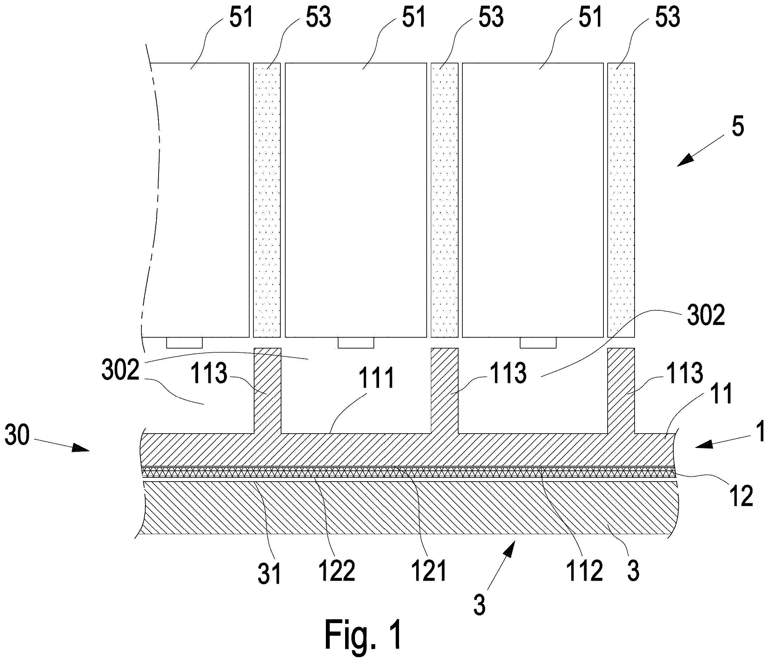

Die Figur 1 stellt eine Isolatorvorrichtung 1 in einem Batteriegehäuse 3 dar, wobei das Batteriegehäuse 3 mindestens eine Gehäusewandung 31 zur Umschließung eines Innenraumes 30 umfasst. Zur vereinfachten Darstellung ist in der Figur 1 lediglich ein Teilausschnitt aus dem Batteriegehäuse 3 dargestellt. In dem Innenraum 30 ist wie dargestellt eine Batteriezellanordnung 5 aufgenommen. Bei einer derartigen Batteriezellanordnung 5 kann es sich um eine Zusammenfassung mehrerer Batterieeinzelzellen 51 handeln, welche beispielsweise über weitere Strukturelemente wie insbesondere einer Zellträgerstruktur 53 zu einer Batteriezellanordnung 5 zusammengefasst werden. Derartige Zellanordnungen können beispielsweise Träger oder Streben zur Aufnahme und Abgrenzung der einzelnen Batteriezellen umfassen. Durch die Vorsehung des Batteriezellanordnungen 5 können mehrere Einzelbatteriezellen 51 zu einem Verbund zusammengestellt werden, welcher über eine hohe mechanische Stabilität verfügt.

In der Figur 1 ist eine erste Isolationsschicht 11 im Schnitt dargestellt, welche ausgebildet ist zur elektrischen und thermischen Isolation der Batteriezellanordnung 5. Die erste Isolationsschicht 11 ist zunächst im Wesentlichen flächig ausgebildet und weist eine zur Batteriezellanordnung 5 zugewandte erste Oberfläche 111 sowie eine zweite von der Batteriezellanordnung 5 abgewandte zweite Oberfläche 112 auf. Die spezifische beispielhafte Ausführungsform der dargestellten ersten Isolationsschicht 11 weist auf ihrer ersten Oberfläche 111 weiterhin eine Vielzahl optionaler hervorstehender Elemente 113 auf, welche zur Ausbildung und Unterteilung eines Zwischenraums zwischen der Batteriezellanordnung 5 und der ersten Oberfläche 111 in mehrere Zwischenraumsektionen bzw. zur Ausbildung mehrerer Entlüftungskanäle 302, wie in Figur 1 dargestellt, ausgebildet sind.

Die dargestellte Isolatorvorrichtung 1 gemäß Figur 1 weist weiterhin eine zweite Isolationsschicht 12 auf, welche zwischen der ersten Isolationsschicht 11 und der Gehäusewandung 31 angeordnet ist. Die mindestens eine zweite Isolationsschicht 12 kann im Wesentlichen parallel zu der mindestens einen ersten Isolationsschicht 11, wie in Figur 1 dargestellt, verlaufen. Erfindungsgemäß können jedoch auch abweichende Verlaufsformen der ersten und/oder zweiten Isolationsschicht 11, 12 relativ zu dem Batteriegehäuse 3 vorgesehen werden.

Die zweite Isolationsschicht 12 kann im Wesentlichen wieder flächig, insbesondere plattenförmig ausgebildet werden und eine der ersten Isolationsschicht 11 zugewandte erste Oberfläche 121 und eine der ersten Isolationsschicht 11 abgewandte zweite Oberfläche 122 umfassen. Die zweite Oberfläche 122 ist dabei der Gehäusewandung 31 zugewandt.

Die mindestens eine zweite Isolationsschicht 12 kann lösbar mit der Gehäusewandung 31 und/oder lösbar mit der ersten Isolationsschicht 11 verbindbar ausgestaltet werden.

Die zweite Oberfläche 122 der mindestens einen ersten Isolationsschicht kann bevorzugt mit der ersten Oberfläche 121 der mindestens einen zweiten Isolationsschicht 12 verbunden werden, sodass die erste und zweite Isolationsschicht 11, 12 einen gemeinsamen Gegenstand bilden.

Die mindestens eine erste Isolationsschicht 11 kann lösbar mit dem Batteriegehäuse 3 und/oder mit der Batteriezellanordnung 5 ausgestaltet werden. Dabei können beispielsweise Verrastungselemente (in Figur 1 nicht dargestellt) im Bereich der ersten Isolationsschicht 11 oder der Vorsprünge 113 vorgesehen werden, welche mit Anteilen der Batteriezellanordnung 5 insbesondere mit Strukturteilen der Batteriezellanordnung 5 zur trennbaren Festlegung der Isolatorvorrichtung 1 gegenüber der Batteriezellanordnung 5 lösbar verbunden werden können.

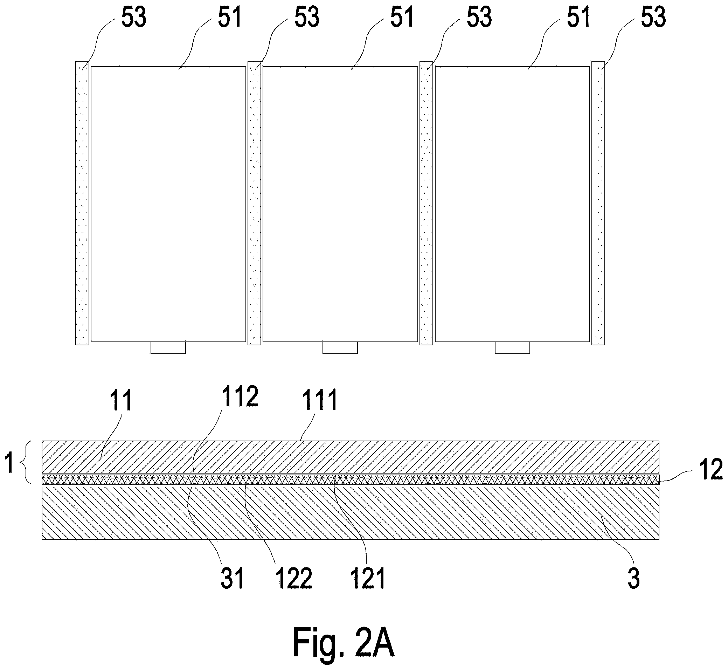

In der Fig. 2A ist eine schematische Schnittansicht einer zweiten beispielhaften Ausführungsform einer erfindungsgemäßen Isolatorvorrichtung 1 umfassend eine erste Isolationsschicht 11 sowie eine zweite Isolationsschicht 12 dargestellt. In der dargestellten Ausführungsform weist die erste Isolationsschicht 11 im Unterschied zu der dargestellten Ausführungsform in Fig. 1 keine hervorstehenden Elemente 113 auf. In der dargestellten Ausführungsform gemäß Fig. 2A sind die erste Isolationsschicht 11 und die zweite Isolationsschicht 12 miteinander lösbar verbunden. Wie dies der Fig. 2A entnehmbar ist, liegen die zweite Oberfläche 112 der ersten Isolationsschicht 11 und die erste Oberfläche 121 der zweiten Isolationsschicht 12 zur lösbaren Anbindung unmittelbar aneinander ab bzw. weisen einen geringen Abstand zueinander auf in welchem Elemente zur Realisierung der trennbaren Verbindung zwischen der ersten und zweiten Isolationsschicht 11,12 angeordnet werden können, wie beispielsweise eine Haken-Ösenverbindung.

Weiterhin ist gemäß der Ausführungsform in Fig. 2A vorgesehen, dass die Isolatorvorrichtung 1 lösbar mit der Gehäusewandung 31 des Batteriegehäuses verbunden ist. Die zweite Oberfläche 122 der zweiten Isolationsschicht 12 verläuft dabei zumindest anteilig parallel zu der Gehäusewandung 31 bzw. liegt an der Gehäusewandung 31 an, um eben in diesem Bereich eine lösbare Verbindung zwischen der Isolatorvorrichtung 1 über die zweite Isolationsschicht 12 mit der Gehäusewandung 31 auszubilden. Bei der lösbaren Verbindung zwischen der Gehäusewandung 31 und der zweiten Isolationsschicht 12 bzw. zwischen der zweiten Isolationsschicht 12 und der ersten Isolationsschicht 11 kann es sich insbesondere um eine Haken-Ösen-Verbindung, wie beispielsweise eine Verbindung nach Art eines Klettverschlusses oder um alternative lösbare Verbindungsarten, handeln.

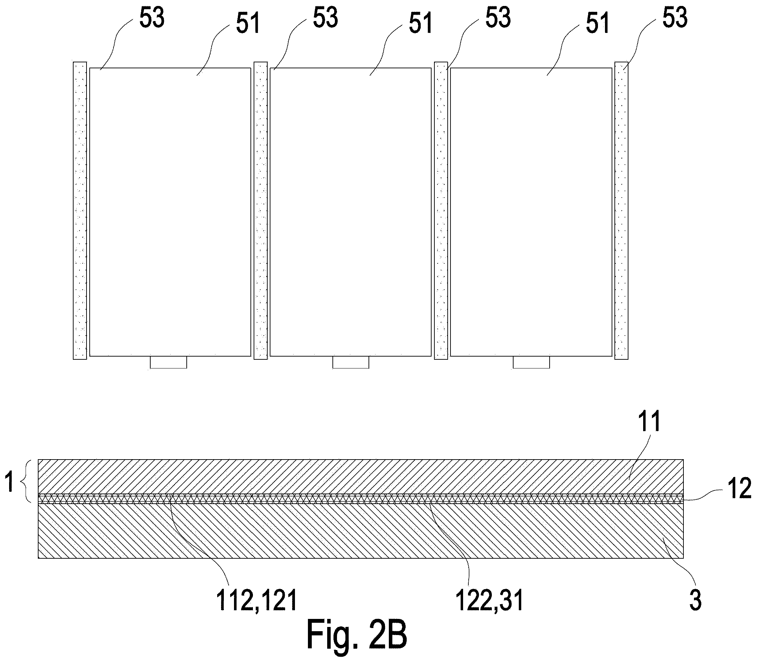

In der Fig. 2B ist eine alternative dritte Ausführungsform einer erfindungsgemäßen Isolatorvorrichtung 1 dargestellt, welche wiederum eine erste Isolationsschicht 11 sowie eine zweite Isolationsschicht 12 aufweist. Im Unterschied zu der Ausführungsform gemäß der Fig. 2A ist die Isolatorvorrichtung 1 jedoch untrennbar, wie insbesondere kraft- und/oder formschlüssig mit der Gehäusewandung 31 des Batteriegehäuses 3 verbunden. Dabei kann auch eine stoffschlüssige Verbindung der Isolatorvorrichtung 1 mit dem Batteriegehäuse 3 ausgebildet werden. Die zweite Oberfläche 112 der ersten Isolationsschicht 11 ist unmittelbar anliegend an der ersten Oberfläche 121 der zweiten Isolationsschicht 12 ausgebildet bzw. bildet mit dieser ein gemeinsame Oberfläche aus. Weiterhin ist die zweite Oberfläche 122 der zweiten Isolationssicht 22 unmittelbar anliegend an der Gehäusewandung 31 ausgebildet.

Bei den entsprechenden kraft- und/oder formschlüssigen Verbindungen kann es sich beispielsweise um eine Verklebung handeln, insbesondere können zwischen der mindestens einen ersten und/oder zweiten Isolationsschicht 11, 12 und/oder der Gehäusewandung 31 auch Haftvermittler Verwendung finden.

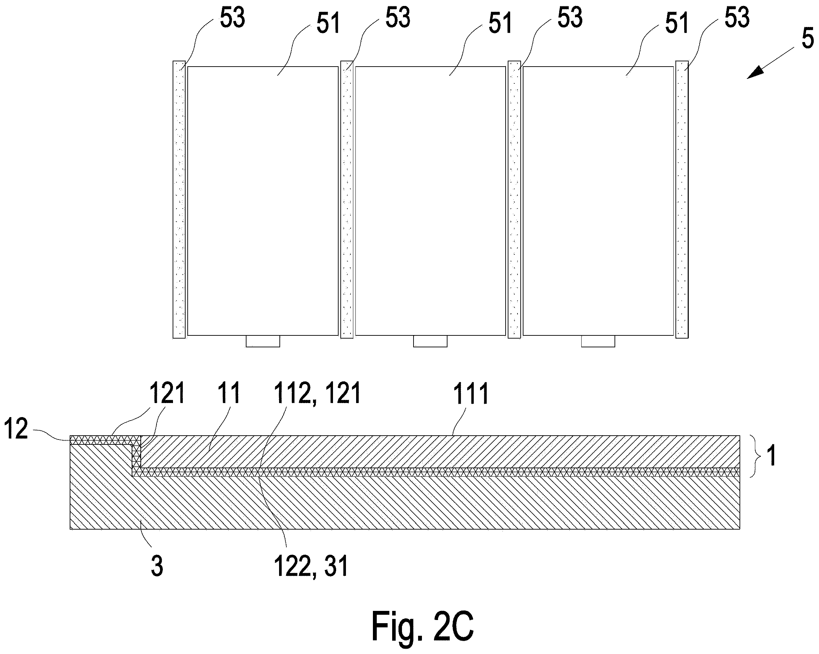

In der Fig. 2C ist eine vierte beispielhafte Ausführungsform einer erfindungsgemäßen Isolatorvorrichtung 1 dargestellt, wobei die Ausführungsform gemäß Fig. 2C zunächst übereinstimmend mit der Ausführungsform gemäß Fig. 2B ausgeführt ist, wobei ein kraft- und formschlüssiger Verbund zwischen der ersten und zweiten Isolationsschicht 11, 12 sowie der Batteriewandung 31 etabliert wird. Die zweite Isolationsschicht 12 ist in Abweichung zu Fig. 2B länger als die erste Isolationsschicht 11 im Bereich des in der Figurenebene linken Endes ausgeführt, womit die erste Isolationsschicht 11 die zweite Isolationsschicht 12 zumindest in dem linken Teilbereich in Richtung der dargestellten Batteriezellanordnung 5 nicht überdeckt.

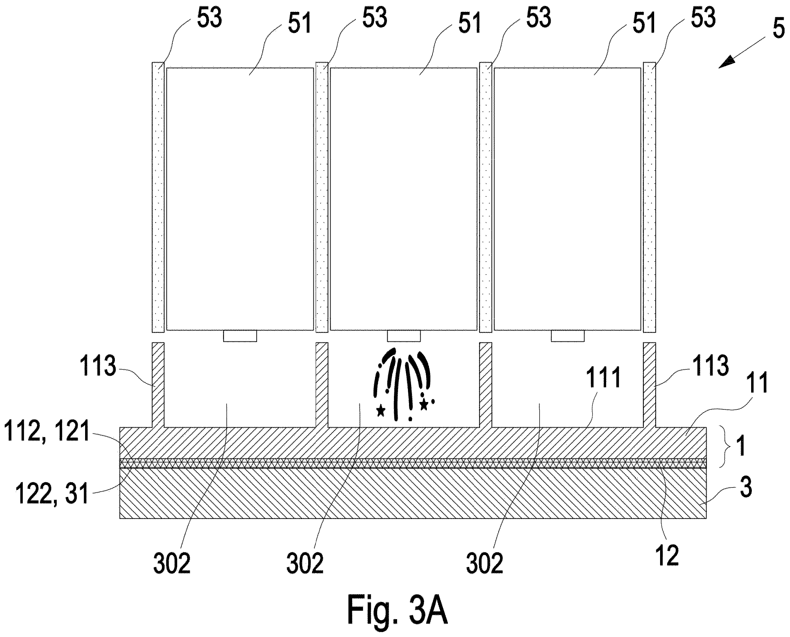

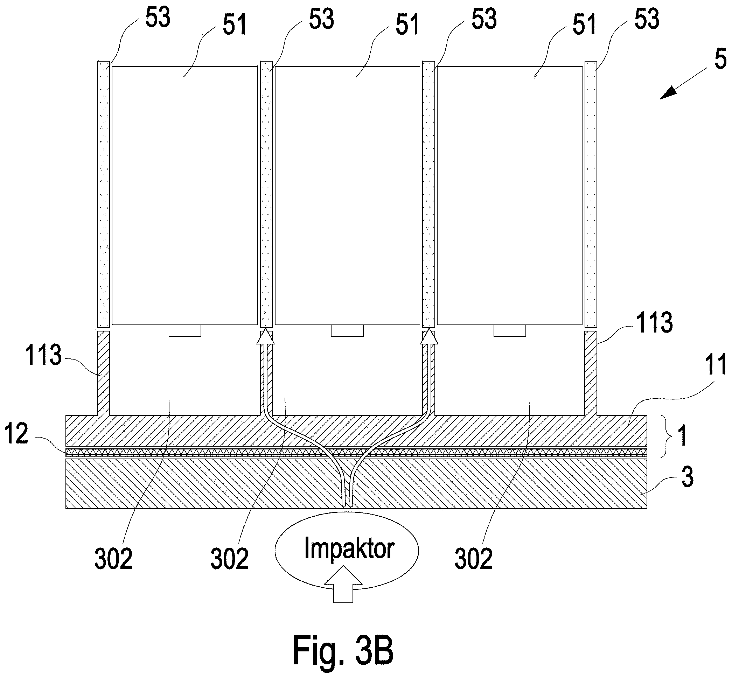

Die Figuren 3A und 3B zeigen gemeinsam eine fünfte beispielshafte Ausführungsform einer erfindungsgemäßen Isolatorvorrichtung 1, welche wiederum eine erste und zweite Isolationsschicht 11, 12 umfasst, welche miteinander verbunden sind, die zweite Isolationsschicht 12 ist wiederum mit der Wandung 31 der Batteriegehäuses 3 verbunden. Die erste Isolationssicht 11 weist auf deren ersten Oberfläche 111, welche der Batteriezellanordnung 5 zugewandt ist mehrere Erhebungen 113 auf, welche in der dargestellten Ausführungsform rippenförmig ausgebildet sind. Durch die rippenförmigen Erhebungen 113 wird der Zwischenraum zwischen der aufgenommenen Batteriezellanordnung 5 und der ersten Oberfläche 111 der ersten Isolationsschicht in mehrere voneinander durch die rippenförmigen Erhebungen 113 im Wesentlichen abgegrenzten Teilbereiche unterteilt, welche in der dargestellten Variante drei Entlüftungskanäle 302 bilden. In der Bildebene ist das Querschnittsprofil der Entlüftungskanäle 302 dargestellt, welche ihren Verlauf in die Tiefe der Bildebene der Figuren 3A und 3B haben.

Wenn es nunmehr wie in Fig. 3A schematisch dargestellt zu einem thermischen Durchgehen (thermal runaway) in einer in der Batteriezellanordnung 5 umfassten Batterieeinzelzelle 51 kommt, dann treten an einem Sicherheitsventil (nicht dargestellt) der Batterieeinzelzelle 51 heiße Ventinggase, Fluide und auch Partikel mit einer hohen Geschwindigkeit und einem hohen Druck aus. Diese treffen nunmehr auf die erste Isolationsschicht 11 der Isolatorvorrichtung 1 und können durch den jeweiligen Entlüftungskanal 302 geleitet und beispielsweise zu einem Sicherheitsventil des Batteriegehäuse 3 geleitet werden. Durch die vorgesehene Anordnung wird ein Auftreffen der heißen Venting Gase und Partikel unmittelbar auf die Wandung 31 des Batteriegehäuses 3 verhindert und gleichzeitig werden die austretenden Gase kanalisiert in dem jeweiligen Entlüftungskanal 302, wodurch die thermische Belastung benachbarter Batterieeinzelzellen 51 der Batteriezellanordnung 5 reduziert werden kann.

Wie in den Figuren 3A und 3B ersichtlich sind die Erhebungen 113 der ersten Isolationsschicht 11 gegenüberliegend mit Zellträgerstrukturen bzw. Zellträgerelementen 53 der Batteriezellanordnung 5 ausgebildet. Die Erhebungen 113 sind gerade nicht in den Bereichen der Batterieeinzelzellen 51 angeordnet. Wenn es nunmehr wie in Fig. 3B zu einem Auftreffen eine Gegenstandes, wie beispielweise eines Steines auf den äußeren Bereich des Batteriegehäuses 5 kommt, so können die auftretenden Kräfte von dem Batteriegehäuse 3 über die Isolatorvorrichtung 1 und insbesondere über deren hervorstehenden Elemente 113 der ersten Isolationsschicht 11 unmittelbar an die Zellträgerstrukturen 53 übertragen bzw. in diese vorteilhaft eingeleitet werden. Eine Einleitung bzw. Übertragung der externen Kräfte auf die Batterieeinzelzellen 51 kann somit erfindungsgemäß verhindert bzw. weitegehend reduziert werden.

## Patentansprüche

1. Isolatorvorrichtung (1) für ein Batteriegehäuse (3),
wobei das Batteriegehäuse (3) mindestens eine Gehäusewandung (31) zur Umschließung eines Innenraums (30) umfasst zur Aufnahme einer Batteriezellanordnung (5),
die Isolatorvorrichtung (1) umfassend:
mindestens eine zwischen der Batteriezellanordnung (5) und der Gehäusewandung (31) im Innenraum (30) angeordnete erste Isolationsschicht (11),
wobei die mindestens eine erste Isolationsschicht (11) ausgebildet ist zur elektrischen und thermischen Isolation der Batteriezellanordnung (5).

2. Isolatorvorrichtung (1) nach Anspruch 1, wobei die Abmessungen der mindestens einen ersten Isolationsschicht (11) orthogonal zu einer Erstreckungsebene kleiner sind als die Abmessungen der mindestens einen ersten Isolationsschicht (11) in der Erstreckungsebene.

3. Isolatorvorrichtung (1) nach Anspruch 1 oder 2, wobei die mindestens eine erste Isolationsschicht (11) im Wesentlichen flächig, insbesondere plattenförmig, ausgebildet ist und eine zur Batteriezellanordnung (5) zugewandte erste Oberfläche (111) und eine von der Batteriezellanordnung (5) abgewandte zweite Oberfläche (112) aufweist.

4. Isolatorvorrichtung (1) nach einem der Ansprüche 1 bis 3, wobei die mindestens eine erste Isolationsschicht (11) lösbar mit dem Batteriegehäuse (3) und/oder der Batteriezellanordnung (5) verbindbar ist.

5. Isolatorvorrichtung (1) nach einem der Ansprüche 1 bis 4, wobei die mindestens eine erste Isolationsschicht (11) ein Duroplast-Material, insbesondere ein faserverstärktes und/oder glasfaserverstärktes Duroplast-Material umfasst.

6. Isolatorvorrichtung (1) nach Anspruch 5, wobei die mindestens eine erste Isolationsschicht (11) ein Sheet Moulding Compound (SMC)-Material umfasst, wobei bevorzugt das SMC-Material ein Additiv, insbesondere ein Flammschutzmaterial, besonders bevorzugt Aluminiumtrihydrat (ATH) aufweist.

7. Isolatorvorrichtung (1) nach einem der Ansprüche 1 bis 6, wobei die mindestens eine erste Isolationsschicht (11) auf ihrer ersten Oberfläche (111) eine Vielzahl hervorstehender Elemente (113) aufweist, wobei die hervorstehenden Elemente (113) Erhebungen und/oder rippenförmige Vorsprünge umfassen und wobei bevorzugt die Erhebungen und/oder rippenförmigen Vorsprünge zur Unterteilung eines Zwischenraums zwischen der Batteriezellanordnung (5) und der ersten Oberfläche (111) in mehrere Zwischenraumsektionen (301) und/oder zur besonders bevorzugten Ausbildung von Entlüftungskanälen (302) ausgebildet werden.

8. Isolatorvorrichtung (1) nach einem der Ansprüche 6 oder 7, wobei die hervorstehenden Elemente (113) gegenüberliegend einer Zellträgerstruktur der aufzunehmenden Batteriezellanordnung (5) ausgebildet sind, um auftretende Kräfte im Bereich der Gehäusewandung (31) unmittelbar in die Zellträgerstruktur einzuleiten.

9. Isolatorvorrichtung (1) nach einem der Ansprüche 1 bis 8, wobei die Isolatorvorrichtung (1) ferner mindestens eine zwischen der ersten Isolationsschicht (11) und der Gehäusewandung (31) im Innenraum (30) angeordnete zweite Isolationsschicht (12) umfasst, wobei bevorzugt die mindestens eine zweite Isolationsschicht (12) im Wesentlichen flächig, insbesondere plattenförmig, ausgebildet ist und eine der ersten Isolationsschicht (11) zugewandte erste Oberfläche (121) und eine der ersten Isolationsschicht (11) abgewandte zweite Oberfläche (122) aufweist.

10. Isolatorvorrichtung (1) nach Anspruch 8 oder 9, wobei die mindestens eine zweite Isolationsschicht (12) lösbar mit der Gehäusewandung (31) und/oder mit der ersten Isolationsschicht (11) verbindbar ist.

11. Isolatorvorrichtung (1) nach einem der Ansprüche 8 bis 10, wobei die zweite Oberfläche (122) der mindestens einen ersten Isolationsschicht (11) mit der ersten Oberfläche (121) der mindestens einen zweiten Isolationsschicht (12) verbunden ist.

12. Isolatorvorrichtung (1) nach einem der Ansprüche 8 bis 11, wobei die mindestens eine zweite Isolationsschicht (12) eine Folie aus Metall, insbesondere eine Aluminium-Folie umfasst, oder wobei die mindestens eine zweite Isolationsschicht (12) eine Folie aus Kunststoff mit einer metallischen Beschichtung, insbesondere einer Kupfer- und/oder Nickelbeschichtung umfasst.

13. Isolatorvorrichtung (1) nach einem der Ansprüche 8 bis 11, wobei die mindestens eine zweite Isolationsschicht (12) ein Gewebe gebildet aus Fäden, insbesondere aus metallischen Fäden oder ein Gewebe gebildet aus Kunststoffasern mit einer Beschichtung, insbesondere einer metallischen Beschichtung, insbesondere einer Kupfer- oder Nickel-Beschichtung umfasst.

14. Isolatorvorrichtung (1) nach einem der Ansprüche 8 bis 11, wobei die mindestens eine zweite Isolationsschicht (12) Stoffe, insbesondere gewebte Stoffe oder Vliese mit einer Beschichtung, insbesondere einer metallischen Beschichtung, bevorzugt einer Kuper- oder Aluminium- oder Nickelbeschichtung umfasst.

15. Batteriegehäuse (3), umfassend:
mindestens eine Gehäusewandung (31) zur Umschließung eines Innenraums (30) zur Aufnahme einer Batteriezellanordnung (5), und mindestens eine Isolatorvorrichtung (1) mit den Merkmalen gemäß einem der Ansprüche 1 bis 14;
wobei die mindestens eine Isolatorvorrichtung (1) zwischen der Batteriezellanordnung (5) und der Gehäusewandung (31) im Innenraum (30) angeordnet ist und, wobei bevorzugt die mindestens eine Gehäusewandung (31) aus einem thermoplastischen Kunststoff ausgebildet ist.

16. Verwendung einer Isolatorvorrichtung (1) nach einem der Ansprüche 1 - 14 in dem Batteriegehäuse (3) einer Kraftfahrzeugbatterie, insbesondere einer Kraftfahrzeugbatterie von elektrisch angetriebenen Kraftfahrzeugen.
